# EUROPEAN PATENT APPLICATION

(11) **EP 4 513 328 A1**
(43) Date of publication of application: **26.02.2025**
(21) Application number: 23791234.0
(22) Date of filing: 18.04.2023
(51) Int. Cl.: G06F 9/451

(54) **INFORMATION DISPLAY METHOD AND APPARATUS, AND ELECTRONIC DEVICE**

(30) Priority: 22.04.2022 CN 202210439010
(71) Applicant: Vivo Mobile Communication Co., Ltd., Dongguan, Guangdong 523863 (CN)
(72) Inventor: LIU, Chang, Dongguan, Guangdong 523863 (CN)
(74) Representative: Murgitroyd & Company
(86) International application number: PCT/CN2023/088998
(87) International publication number: WO 2023/202579

(57) **Abstract**

This application discloses an information display method and apparatus and an electronic device, and pertains to the field of communication technologies. The method includes: displaying a first component, where the first component includes N controls, each of the N controls corresponds to a different input mode, and N is an integer greater than 1; receiving a first input performed by a user to a first control of the N controls; and displaying first information in response to the first input, where the first information is obtained based on an input mode corresponding to the first control.

## Description

### CROSS-REFERENCE TO RELATED APPLICATION

This application claims priority to Chinese Patent Application No. 202210439010.X filed in China on April 22, 2022, which is incorporated herein by reference in its entirety.

### TECHNICAL FIELD

This application pertains to the field of communication technologies, and specifically relates to an information display method and apparatus and an electronic device.

### BACKGROUND

At present, with the popularization of the Internet, electronic devices have gradually been integrated into daily lives and work of users. For example, users can use electronic devices to record some inspiration or some important information.

Typically, when users want to record some inspiration or important information, they can trigger the electronic device to open a memo. Then, when the users trigger the electronic device to display an editing interface of the memo, they can input some text information via the virtual keyboard. After that, the users can trigger the electronic device to save the text information.

However, based on the foregoing method, if the users want to record some inspiration or important information, they can record the information only through text input. As a result, the electronic device records information in a single way.

### SUMMARY

Embodiments of this application are intended to provide an information display method and apparatus and an electronic device, which can solve an issue that the electronic device records information in a single way.

According to a first aspect, an embodiment of this application provides an information display method, where the method includes: displaying a first component, where the first component includes N controls, each of the N controls corresponds to a different input mode, and N is an integer greater than 1; receiving a first input performed by a user to a first control of the N controls; and displaying first information in response to the first input, where the first information is obtained based on an input mode corresponding to the first control.

According to a second aspect, an embodiment of this application provides an information display apparatus, where the information display apparatus includes a display module and a receiving module. The display module is configured to display a first component, where the first component includes N controls, each of the N controls corresponds to a different input mode, and N is an integer greater than 1. The receiving module is configured to receive a first input performed by a user to a first control of the N controls. The display module is further configured to display first information in response to the first input received by the receiving module, where the first information is obtained based on an input mode corresponding to the first control.

According to a third aspect, an embodiment of this application provides an electronic device, where the electronic device includes a processor and a memory, the memory stores a program or instructions capable of running on the processor, and when the program or instructions are executed by the processor, the steps of the method according to the first aspect are implemented.

According to a fourth aspect, an embodiment of this application provides a readable storage medium, where the readable storage medium stores a program or instructions, and when the program or instructions are executed by a processor, the steps of the method according to the first aspect are implemented.

According to a fifth aspect, an embodiment of this application provides a chip, where the chip includes a processor and a communication interface, the communication interface is coupled to the processor, and the processor is configured to run a program or instructions so as to implement the method according to the first aspect.

According to a sixth aspect, an embodiment of this application provides a computer program product, where the program product is stored in a storage medium, and the program product is executed by at least one processor so as to implement the method according to the first aspect.

In the embodiments of this application, a first component is displayed, where the first component includes N controls, each of the N controls corresponds to a different input mode, and N is an integer greater than 1; a first input performed by a user to a first control of the N controls is received; and first information is displayed in response to the first input, where the first information is obtained based on an input mode corresponding to the first control. According to this scheme, when a user wants to record some information, in a case that the first component is displayed, because the first component includes at least two controls corresponding to different input modes, the user can trigger, based on an input performed on one of the at least two controls, the display of information obtained based on an input mode corresponding to the one control; or the user can trigger, based on an input performed on another one of the at least two controls, the display of information obtained based on an input mode corresponding to the another control, so that the user can record information in different input modes, not only by text input. In this way, the ways for electronic devices to record information are enriched.

### BRIEF DESCRIPTION OF DRAWINGS

FIG. 1 is a schematic diagram of an information display method according to an embodiment of this application;
FIG. 2 is a schematic diagram of a component according to an embodiment of this application;
FIG. 3 is a first schematic diagram of an interface for inputting information according to an embodiment of this application;
FIG. 4 is a second schematic diagram of an interface for inputting information according to an embodiment of this application;
FIG. 5 is a third schematic diagram of an interface for inputting information according to an embodiment of this application;
FIG. 6 is a schematic diagram of an interface for viewing information in a component according to an embodiment of this application;
FIG. 7 is a schematic diagram of an interface for displaying information according to an embodiment of this application;
FIG. 8 is a schematic structural diagram of an information display apparatus according to an embodiment of this application;
FIG. 9 is a schematic structural diagram of an electronic device according to an embodiment of this application; and
FIG. 10 is a schematic diagram of hardware of a server according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that data used in this way is used interchangeably in appropriate circumstances so that the embodiments of this application can be implemented in other orders than the order illustrated or described herein. In addition, "first" and "second" are usually used to distinguish between objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

In the related art, if a user has a flash of inspiration and ideas, the user can usually trigger an electronic device to record information in a dialog box of a communication application or memo, or record the information in a notebook of an application. However, although the above ways can meet the needs of recording, they still have many defects: (1) users usually need to trigger electronic devices to perform multi-step operations to complete the recording; (2) it is inconvenient for users to search for and integrate information later; (3) users usually record information by typing, which makes electronic devices less efficient in recording information; and (4) the content of the notes is displayed in a single form, which does not support the personalized editing needs of users.

Based on the foregoing technical deficiencies, an embodiment of this application provides an information display method, when a user wants to record some information, in a case that a first component is displayed, because the first component includes at least two controls corresponding to different input modes, the user can trigger, based on an input performed on one of the at least two controls, the display of information obtained based on an input mode corresponding to the one control; or the user can trigger, based on an input performed on another one of the at least two controls, the display of information obtained based on an input mode corresponding to the another control, so that the user can record the information in different input modes, not only by text input. In this way, the ways for electronic devices to record information are enriched.

The method and information display apparatus and electronic device provided in the embodiments of this application are hereinafter described in detail by using specific embodiments and application scenarios thereof with reference to the accompanying drawings.

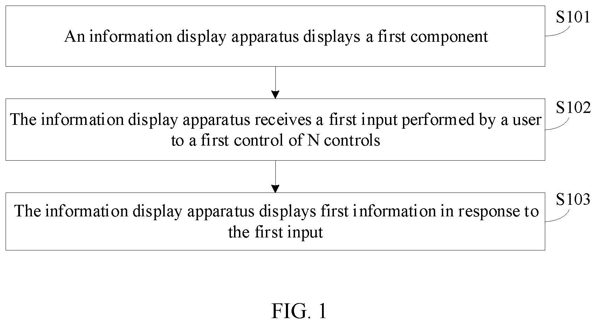

As shown in FIG. 1, an embodiment of this application provides an information display method, where the method includes the following steps S101 to S103.

S101. An information display apparatus displays a first component.

The first component includes N controls, each of the N controls corresponds to a different input mode, and N is an integer greater than 1.

Optionally, the N controls include a text control, where the text control corresponds to a text input mode; and the N controls include a voice control, where the voice control corresponds to a voice input mode; and the N controls include a shooting control, where the shooting control corresponds to an image acquisition mode.

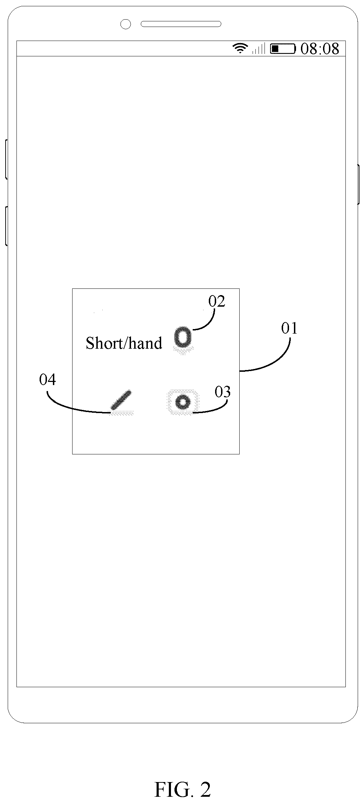

For example, a component 01 shown in FIG. 2 is the first component, and the component 01 includes a voice control 02, a shooting control 03, and a text control 04.

Optionally, in a possible case, the first component may be a desktop component, meaning that the first component is displayed on the desktop; in another possible case, the first component is a hover component, meaning that the first component is displayed in a hover manner.

S102. The information display apparatus receives a first input performed by a user to a first control of the N controls.

Optionally, the first input may be a touch input, a voice input, or a gesture input performed by a user to the first control. For example, the touch input is a tap input performed by the user on the first control.

S103. The information display apparatus displays first information in response to the first input.

The first information is obtained based on an input mode corresponding to the first control.

Optionally, the first information may include at least one of the following: text information, voice information, and image information.

Optionally, the foregoing S103 may specifically include the following steps S103A to S103C.

S103A. In response to the first input, the information display apparatus displays a target interface corresponding to the first control.

The target interface includes any one of the following: a text editing interface, a shooting preview interface, and a voice recording interface.

For example, the first control is a text control and the target interface is a text editing interface; the first control is a voice control and the target interface is a voice recording interface; and the first control is a shooting control and the target interface is a shooting preview interface.

Optionally, in a case that the target interface is a shooting preview interface, in response to the first input, information about an acquired image is displayed in the displayed target interface in a preview manner.

S103B: The information display apparatus receives a second input performed by a user.

An input mode of the second input is the input mode corresponding to the first control.

For example, the first control corresponds to a voice input mode, meaning that the second input is a voice input; the first control corresponds to a text input mode, meaning that the second input is a tap input performed on a key on the virtual keyboard; and the first control corresponds to an image acquisition mode, meaning that the second input is a tap input performed on the shooting control.

S103C. In response to the second input, the information display apparatus displays, in the target interface, the first information input through the second input.

Optionally, in a case that the target interface is a text editing interface, text information is displayed in an editing area of the text editing interface; in a case that the target interface is a voice recording interface, text information is displayed on the voice recording interface; and in a case that the target interface is a shooting preview interface, image information is displayed in a preset display area of the shooting preview interface.

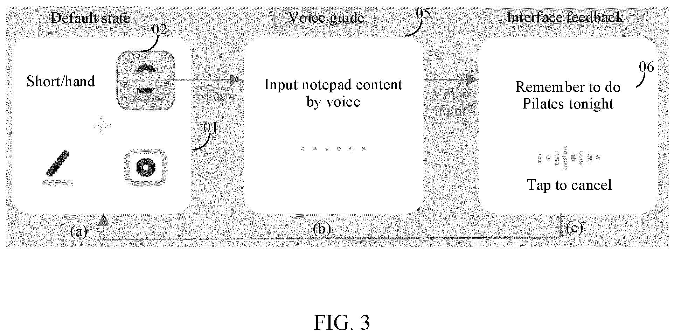

For example, the information display apparatus being a mobile phone is used as an example. As shown in (a) of FIG. 3, the mobile phone displays a component 01. If a user wants to use the voice recording mode to record information, the user can tap a control 02 of the component 01. When the mobile phone receives a tap input performed on the control 02, in response to the tap input, the mobile phone displays a voice recording interface 05 as shown in (b) of FIG. 3. Next, the user can input a voice on the voice recording interface 05. After the mobile phone receives the voice input, in response to the voice input, the mobile phone displays text information 06 on the voice recording interface 05 as shown in (c) of FIG. 3.

It should be noted that when the second input is a voice input, the first information can be displayed in real time, and the first information is text information obtained through voice conversion of the voice information input through the second input.

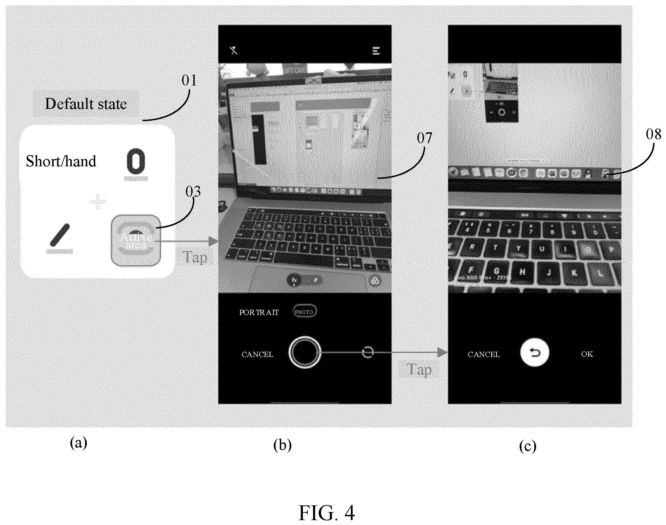

For example, the information display apparatus being a mobile phone is used as an example. As shown in (a) of FIG. 4, the mobile phone displays a component 01. If a user wants to use the shooting mode to record information, the user can tap a control 03 of the component 01. When the mobile phone receives a tap input performed on the control 03, in response to the tap input, the mobile phone displays a shooting preview interface 07 as shown in (b) of FIG. 4. Next, the user can tap the shutter button on the shooting preview interface 07. After the mobile phone receives the tap input, in response to the tap input, the mobile phone displays image information 08 on the shooting preview interface 07 as shown in (c) of FIG. 4.

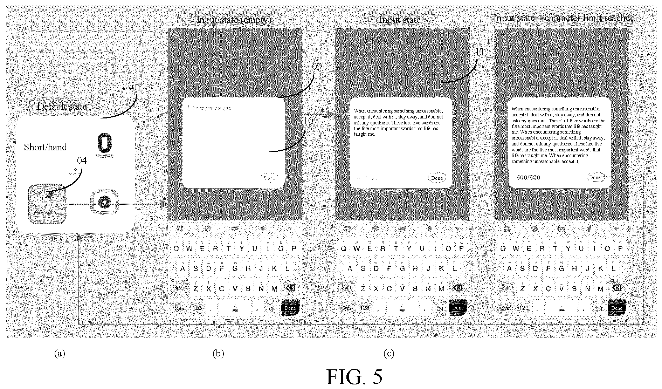

For example, the information display apparatus being a mobile phone is used as an example. As shown in (a) of FIG. 5, the mobile phone displays a component 01. If a user wants to use the text mode to record information, the user can tap a control 04 of the component 01. When the mobile phone receives a tap input performed on the control 04, in response to the tap input, the mobile phone displays a text editing interface 09 as shown in FIG. 5 (b). Next, the user can tap a key on the virtual keyboard of the text editing interface 09. After the mobile phone receives the tap input, in response to the tap input, the mobile phone displays text information 11 in an edit box 10 of the text editing interface 09 as shown in (c) of FIG. 5.

It can be understood that because one control corresponds to one input mode, the user can select one control from the N controls depending on an actual situation and input for the control, so that the user can record information in an input mode corresponding to the control.

Optionally, after S103, the information display method provided in this embodiment of this application may further include: the information display apparatus stores the first information in a storage space corresponding to the first component. In this way, since information recorded by the user is stored in the storage space corresponding to the first component, the user can trigger the electronic device to display the recorded information through the first component, thus facilitating the user to view the information.

Optionally, the storing the first information in a storage space corresponding to the first component specifically includes: the information display apparatus stores the first information in the storage space corresponding to the first component in response to an input performed by a user to a confirmation control of the target interface. In this way, the user can trigger, depending on an actual situation, the storage of the first information to the storage space corresponding to the first component.

It should be noted that in a case that the first information is text information or voice information, the first information can be stored in the storage space corresponding to the first component; and in a case that the first information is image information, the first information can be stored in the storage space corresponding to the first component, and the first information can also be stored in a storage space corresponding to the gallery.

Based on the information display method provided in this embodiment of this application, when a user wants to record some information, in a case that a first component is displayed, because the first component includes at least two controls corresponding to different input modes, the user can trigger, based on an input performed on one of the at least two controls, the display of information obtained based on an input mode corresponding to the one control; or the user can trigger, based on an input performed on another one of the at least two controls, the display of information obtained based on an input mode corresponding to the another control, so that the user can record the information in different input modes, not only by text input. In this way, the ways for electronic devices to record information are enriched.

Optionally, after S101, the information display method provided in this embodiment of this application may further include S104 and S105 described below.

S104. The information display apparatus receives a third input performed by a user to the first component.

It can be understood that before S104 is performed, the user has already implemented the scheme as in S101 to S103 in the foregoing embodiment to record information, so that the first component can be triggered to query the recorded information.

Optionally, the third input may be an input performed by the user on a target control on the first component, where the target control is used to trigger the query of the information stored in the storage space corresponding to the first component; or the third input is an input performed by the user on a target area in the first component, where the target area is used to trigger the query of the information stored in the storage space corresponding to the first component.

Optionally, the third input may be a touch input, a voice input, or a gesture input performed by a user to the first component. For example, the touch input is a tap input performed by the user on a shorthand control (that is, a target control) on the first component.

S105. In response to the third input, the information display apparatus unfolds the first component and displays first key information in an unfolded area of the first component.

The first key information includes key information recorded based on an input mode corresponding to at least one control.

It can be understood that the at least one control is a control of the N controls included in the first component.

Optionally, the number of pieces of first key information may be one or more.

Optionally, information content of the first key information may include at least one of the following: text information, voice information, and image information.

Optionally, after S105, the information display method provided in this embodiment of this application may further include: receiving an input by a user; and displaying an information editing interface in response to the input, where the information editing interface includes detailed information of the first key information, and the information editing interface is used for editing the detailed information of the first key information.

Further, in a case that the detailed information of the first key information includes a plurality of pieces of detailed information, after the information editing interface is displayed, the information display method provided in this embodiment of this application may further include: the information display apparatus receives an input performed by the user on one of the plurality of pieces of detailed information; and the information display apparatus updates the one piece of detailed information in response to the input. In this way, the user can trigger the update of information in the information editing interface through the input performed on the information editing interface depending on an actual need.

Optionally, the updating the detailed information may specifically include three possible implementations:
(1) updating a display form of the detailed information;
(2) updating information content of the detailed information; and
(3) updating a display form and information content of the detailed information.

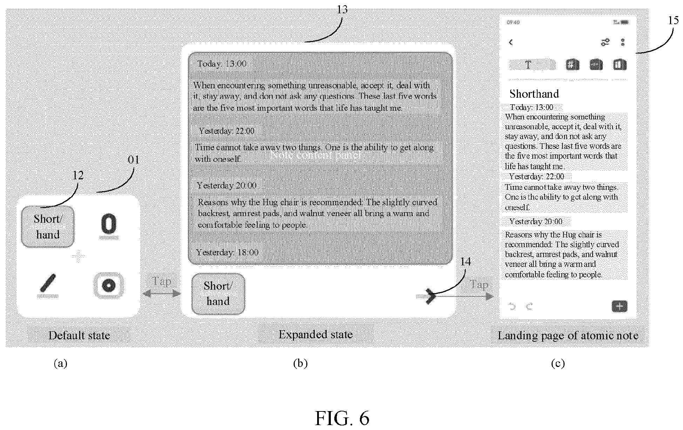

For example, the information display apparatus being a mobile phone is used as an example. As shown in (a) of FIG. 6, the mobile phone displays a component 01. If a user wants to use and view recorded information, the user can tap a control 12 of the component 01. When the mobile phone receives a tap input performed on the control 11, the mobile phone unfolds the first component in response to the tap input as shown in (b) of FIG. 6, and displays three pieces of key information in an unfolded display area 13 of the first component. In this way, the user can quickly view the recorded information on the component.

Further, if the user wants to edit these three pieces of key information, the user can tap the control 14. After the mobile phone receives the tap input performed on the control 14, in response to the tap input, the mobile phone displays the landing page of an atomic note, that is, the information editing interface 15, as shown in (c) of FIG. 6. In this way, the user can edit the information in the information editing interface 15 depending on an actual need.

The information display method provided in this embodiment of this application can trigger the display of at least one piece of key information recorded on the unfolded area of the first component through the input performed on the first component, thereby facilitating the user to directly view the recorded information on the desktop.

Optionally, the storage space corresponding to the first component stores S pieces of information, where the S pieces of information are information input based on an input mode corresponding to at least one control, and S is a positive integer; and after S101, the information display method provided in this embodiment of this application may further include S106 described below.

S106. The information display apparatus displays a second component.

The second component includes second key information, where the second key information is key information of at least one of the S pieces of information; and the at least one piece of information may include at least one of the following: information determined based on a target input, information including a preset keyword, and information conforming to a preset display mode.

Optionally, the second component may be a desktop component or a component displayed in a hover manner.

Optionally, the second component and the first component can be simultaneously displayed on the electronic device; or after the first component is displayed, the second component is displayed; or the first component is updated and displayed as the second component. Specifically, this may be determined depending on an actual use requirement, and is not limited in this embodiment of this application.

Optionally, the foregoing target input, preset keyword, and preset display mode may all be customized by a user, or set by a manufacturer when the electronic device leaves the factory.

Optionally, S106 may specifically include: the information display apparatus displays second key information in the second component according to a preset typesetting mode.

Optionally, the second key information may include at least one of the following: title and specific information content.

Further, the specific information content may be information intercepted from text content in the at least one piece of information.

For example, the specific information content may be information intercepted from an upper half, a middle part, or a lower half of the text content.

Optionally, the preset typesetting mode may include a preset display width, a preset font style, a preset font size, a preset display order, centered display, left-aligned display, right-aligned display, or other possible typesetting modes.

For example, the second key information may be displayed according to a preset display width, where the preset display width is consistent with an actual width of the second key information.

It should be noted that when the preset display width exceeds a width of a screen of the electronic device, the second key information may be displayed with an ellipsis or may be truncated.

Optionally, the preset display order may be consistent with an arrangement order of the at least one piece of information in the first component.

Optionally, after S106, the information display provided in this embodiment of this application may further include: the information display apparatus receives an input performed by a user to the second key information; in response to the input, the information display apparatus displays an editing interface of the second key information, where the editing interface includes detailed information of the second key information; the information display apparatus receives another input by a user in the editing interface; and the information display apparatus updates the detailed information of the second key information in response to the another input.

Optionally, the updating the detailed information of the second key information may include the following possible implementations:
(1) deleting some information from the detailed information of the second key information;
(2) adding some information to the detailed information of the second key information; and
(3) a display mode of the detailed information of the second key information.

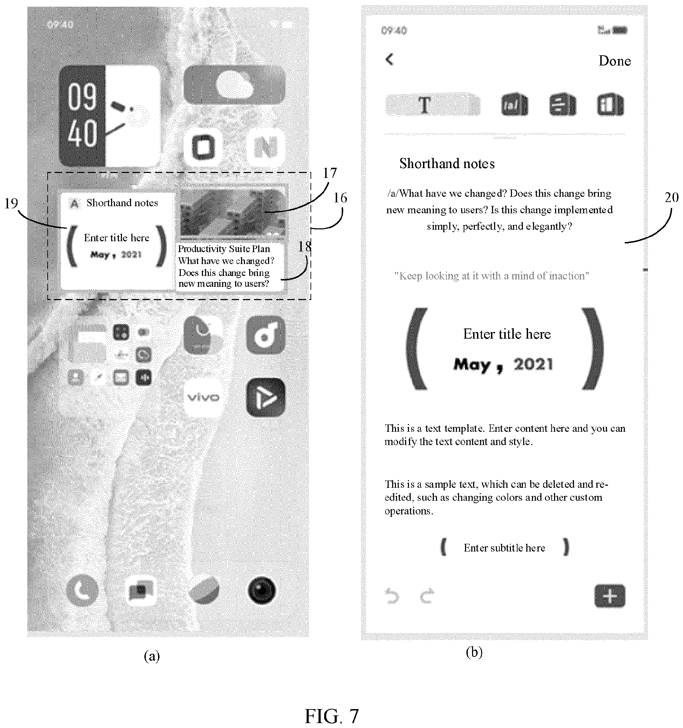

For example, the information display apparatus being a mobile phone is used as an example. As shown in (a) of FIG. 7, the mobile phone displays a component 16, where the component 16 displays image information 17, text information 18, and text information 19. These three pieces of information are highlighted in the component 01. In this way, the user can directly view recorded important information on the component 16.

Further, if the user wants to edit information displayed on the component 16, the user can tap on the text information 19. After the mobile phone receives the tap input performed on the text information 19, an editing interface of the text information 19 as shown in (b) of FIG. 7 can be displayed in response to the tap input. In this way, the user can input in an editing interface of the text information 19 depending on an actual need, so as to trigger the update of detailed information of the text information 19.

The information display method provided in this embodiment of this application can display the second component, and because the second component includes the second key information, the user can directly view important information recorded through the first component on the second component.

Optionally, in the foregoing embodiment, the second component being automatically displayed is used as an example for illustration. Certainly, the second component may alternatively be displayed when triggered by a user. The details can be as follows.

Optionally, the foregoing S106 can be specifically implemented by the following S106A and S106B.

S106A. The information display apparatus receives a fifth input performed by a user to the first component.

Optionally, the fifth input may be a touch input, a voice input, or a gesture input performed by the user. For example, the touch input is a double-tap input performed by the user on the first component.

S106B: The information display apparatus updates the display of the first component to the second component in response to the fifth input.

It can be understood that after the first component is displayed, the user can trigger the update display of the first component as the second component through the input performed on the first component depending on an actual need, so that the user can view recorded important information on the second component.

Optionally, after S101, the information display method provided in this embodiment of this application may further include S107 and S108 described below.

S107. The information display apparatus displays an information editing interface.

The information editing interface contains S pieces of information.

S108. The information display apparatus receives a fourth input performed by a user to the second information in the information editing interface.

Optionally, the second information is information from the S pieces of information, and the number of pieces of second information may be one or more.

Optionally, the fourth input may be a touch input, a voice input, or a gesture input performed by the user on the second information. For example, the touch input is a tap input performed by the user on the second information.

S109. In response to the fourth input, the information display apparatus adds the second information to the second component.

Optionally, S109 may specifically include: in response to the fourth input, the information display apparatus updates a display mode of the second information, and adds updated second information to the second component.

Optionally, after S109, the information display method provided in this embodiment of this application further includes: the information display apparatus displays key information of the second information in the second component.

Optionally, the key information of the second information may be the second key information.

Optionally, the key information of the second information may be an upper part of the second information, a middle part of the second information, a lower part of the second information, or brief information of the second information.

It should be noted that for the description of other key information in this embodiment of this application, reference may be made to the foregoing description of the key information of the second information.

In the information display method provided in this embodiment of this application, after the information editing interface is displayed, the user can trigger the addition of the second information to another component through the input performed on the second information in the information editing interface, so that the user can view the second information from another component. In this way, another entrance is provided to view information.

The information display method provided in this embodiment of this application may be executed by an information display apparatus (for example, the information display apparatus is an electronic device or an external device on the electronic device). In the embodiments of this application, the information display apparatus is explained using the information display apparatus executing the method for display information as an example.

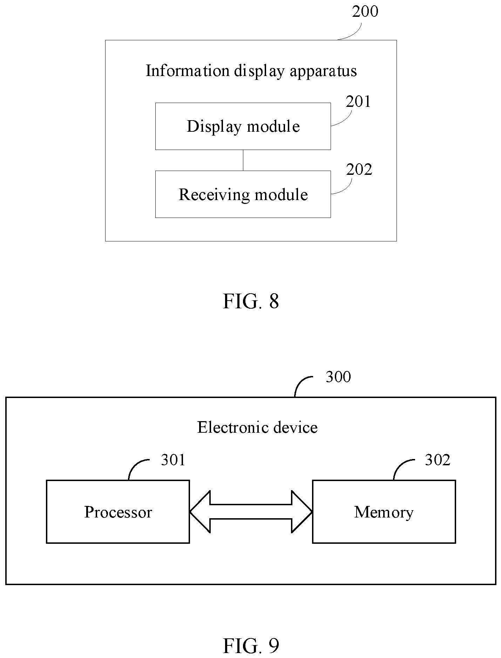

As shown in FIG. 8, an embodiment of this application provides an apparatus 200 for displaying information, where the information display apparatus includes a display module 201 and a receiving module 202. The display module 201 may be configured to display a first component, where the first component includes N controls, each of the N controls corresponds to a different input mode, and N is a positive integer. The receiving module 202 may be configured to receive a first input performed by a user to a first control of the N controls. The display module 201 is further configured to display first information in response to the first input received by the receiving module 202, where the first information is obtained based on an input mode corresponding to the first control.

Optionally, the display module may be specifically configured to, in response to the first input, display a target interface corresponding to the first control. The receiving module may further be configured to receive a second input performed by a user. The display module may be specifically configured to, in response to the second input received by the receiving module, display, in the target interface, the first information input through the second input; where an input mode of the second input is the input mode corresponding to the first control; and the target interface includes any one of the following: a text editing interface, a shooting preview interface, and a voice recording interface.

Optionally, the information display apparatus may further include a processing module. The receiving module may further be configured to receive a third input performed by a user to the first component. The processing module may be configured to, in response to the third input received by the receiving module, unfold the first component, and display first key information in an unfolded area of the first component; where the first key information includes key information recorded based on an input mode corresponding input mode of at least one control.

Optionally, a storage space corresponding to the first component stores S pieces of information, the S pieces of information are information input based on an input mode corresponding to at least one control, and S is a positive integer. The display module can further be configured to display a second component, where the second component includes second key information, the second key information is key information of at least one of the S pieces of information; and the at least one piece of information includes at least one of the following: information determined based on a target input, information including a preset keyword, and information conforming to a preset display mode.

Optionally, the information display apparatus may further include a processing module. The display module may further be configured to display an information editing interface, where the information editing interface contains the S pieces of information. The receiving module may further be configured to receive a fourth input performed by a user to second information in the information editing interface. The processing module may be configured to add the second information to the second component in response to the fourth input received by the receiving module.

Optionally, the receiving module may further be configured to receive a fifth input performed by a user to the first component. The display module is specifically configured to update the display of the first component to the second component in response to the fifth input received by the receiving module.

Optionally, the information display apparatus may further include a storage module; where the storage module may be configured to store the first information into the storage space corresponding to the first component.

Based on the information display apparatus provided in this embodiment of this application, when a user wants to record some information, in a case that a first component is displayed, because the first component includes at least two controls corresponding to different input modes, the user can trigger, based on an input performed on one of the at least two controls, the display of information obtained based on an input mode corresponding to the one control; or the user can trigger, based on an input performed on another one of the at least two controls, the display of information obtained based on an input mode corresponding to the another control, so that the user can record the information in different input modes, not only by text input. In this way, the ways for electronic devices to record information are enriched.

The information display apparatus in this embodiment of this application may be an electronic device, or may be a component in the electronic device, for example, an integrated circuit or a chip. The electronic device may be a terminal or may be another device except the terminal. For example, the electronic device may be a mobile phone, a tablet computer, a notebook computer, a palmtop computer, a vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or may be a server, a network attached storage (Network Attached Storage, NAS), a personal computer (personal computer, PC), a television (television, TV), a teller machine, a self-service machine, or the like. This is not specifically limited in the embodiments of this application.

The information display apparatus in this embodiment of this application may be an apparatus having an operating system. The operating system may be an Android (Android) operating system, iOS operating system, or other possible operating systems. This is not specifically limited in the embodiments of this application.

The information display apparatus provided in this embodiment of this application can implement the processes implemented in the method embodiment in FIG. 1 to FIG. 7. To avoid repetition, details are not described herein again.

Optionally, as shown in FIG. 9, an embodiment of this application further provides an electronic device 300, including a processor 301 and a memory 302, where the memory 302 stores a program or instructions capable of running on the processor 301, and when the program or instructions are executed by the processor 301, the processes of the foregoing information display method embodiment are implemented, with the same technical effects achieved. To avoid repetition, details are not described herein again.

It should be noted that the electronic device in this embodiment of this application includes the above-mentioned mobile electronic device and non-mobile electronic device.

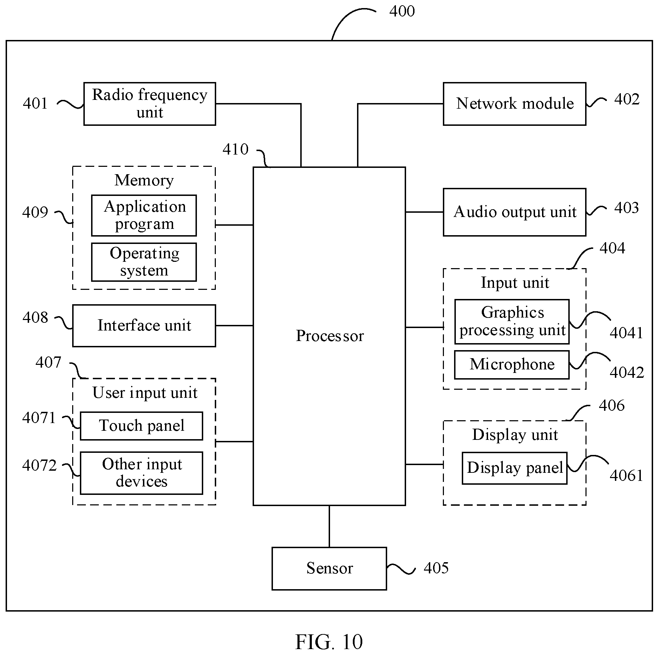

FIG. 10 is a schematic diagram of a hardware structure of an electronic device according to an embodiment of this application.

The electronic device 400 includes but is not limited to components such as a radio frequency unit 401, a network module 402, an audio output unit 403, an input unit 404, a sensor 405, a display unit 406, a user input unit 407, an interface unit 408, a memory 409, and a processor 410.

Those skilled in the art can understand that the electronic device 400 may further include a power supply (for example, a battery) that supplies power to various components. The power supply may be logically connected to the processor 410 through a power management system, so that functions such as charge and discharge management and power consumption management are implemented by using the power management system. The structure of the electronic device shown in FIG. 10 does not constitute a limitation on the electronic device. The electronic device may include more or fewer components than those shown in the figure, or some components may be combined, or there may be a different component layout. Details are not described herein again.

The display unit 406 may be configured to display a first component, where the first component includes N controls, each of the N controls corresponds to a different input mode, and N is a positive integer. The user input unit 407 is configured to receive a first input performed by a user to a first control of the N controls. The display unit 406 is further configured to display first information in response to the first input received by the user input unit 407, where the first information is obtained based on an input mode corresponding to the first control.

Optionally, the display unit 406 is specifically configured to, in response to the first input, display a target interface corresponding to the first control. The user input unit 407 is further configured to receive a second input performed by a user. The display unit 406 is specifically configured to, in response to the second input received by the user input unit 407, display, in the target interface, the first information input through the second input; where an input mode of the second input is the input mode corresponding to the first control; and the target interface includes any one of the following: a text editing interface, a shooting preview interface, and a voice recording interface.

Optionally, the user input unit 407 is further configured to receive a third input performed by a user to the first component. The processor 410 is configured to, in response to the third input received by the user input unit 407, unfold the first component, and display first key information in an unfolded area of the first component; where the first key information includes key information recorded based on an input mode corresponding input mode of at least one control.

Optionally, a storage space corresponding to the first component stores S pieces of information, the S pieces of information are information input based on an input mode corresponding to at least one control, and S is a positive integer. The display unit 406 is further configured to display a second component, where the second component includes second key information, the second key information is key information of at least one of the S pieces of information; and the at least one piece of information includes at least one of the following: information determined based on a target input, information including a preset keyword, and information conforming to a preset display mode.

Optionally, the display unit 406 is further configured to display an information editing interface, where the information editing interface contains the S pieces of information. The user input unit 407 is further configured to receive a fourth input performed by a user to second information in the information editing interface. The processor 410 is configured to add the second information to the second component in response to the fourth input received by the user input unit 407.

Optionally, the user input unit 407 is further configured to receive a fifth input performed by a user to the first component. The display unit 406 is specifically configured to update the display of the first component to the second component in response to the fifth input received by the user input unit 407.

Optionally, the memory 409 is configured to store the first information into the storage space corresponding to the first component.

Based on the electronic device provided in this embodiment of this application, when a user wants to record some information, in a case that a first component is displayed, because the first component includes at least two controls corresponding to different input modes, the user can trigger, based on an input performed on one of the at least two controls, the display of information obtained based on an input mode corresponding to the one control; or the user can trigger, based on an input performed on another one of the at least two controls, the display of information obtained based on an input mode corresponding to the another control, so that the user can record the information in different input modes, not only by text input. In this way, the ways for electronic devices to record information are enriched.

It should be understood that in this embodiment of this application, the input unit 404 may include a graphics processing unit (graphics processing unit, GPU) 4041 and a microphone 4042. The graphics processing unit 4041 processes image data of a static picture or a video that is obtained by an image capture apparatus (for example, a camera) in a video capture mode or an image capture mode. The display unit 406 may include a display panel 4061. The display panel 4061 may be configured in a form of a liquid crystal display, an organic light-emitting diode display, or the like. The user input unit 407 includes at least one of a touch panel 4071 and other input devices 4072. The touch panel 4071 is also referred to as a touchscreen. The touch panel 4071 may include two parts: a touch detection apparatus and a touch controller. The other input devices 4072 may include but are not limited to a physical keyboard, a function key (for example, a volume control key or an on/off key), a trackball, a mouse, and a joystick. Details are not described herein.

The memory 409 may be configured to store software programs and various data. The memory 409 may include first storage area for storing programs or instructions and a second storage area for storing data. The first storage area may store an operating system, an application program or instruction required by at least one function (for example, a sound playback function or an image playback function), and the like. In addition, the memory 409 may include either a volatile memory or a non-volatile memory, or the memory 409 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch Link DRAM, SLDRAM), and a direct rambus random access memory (Direct Rambus RAM, DRRAM). The memory 409 in this embodiment of this application includes but is not limited to these and any other suitable types of memories.

The processor 410 may include one or more processing units. Optionally, an application processor and a modem processor are integrated in the processor 410. The application processor primarily processes operations relating to an operating system, user interfaces, application programs, and the like. The modem processor primarily processes radio communication signals, for example, being a baseband processor. It can be understood that the modem processor may alternatively be not integrated in the processor 410.

An embodiment of this application further provides a readable storage medium, where the readable storage medium stores a program or instructions, and when the program or instructions are executed by a processor, the processes of the foregoing information display method embodiment are implemented, with the same technical effects achieved. To avoid repetition, details are not described herein again.

The processor is the processor in the electronic device in the foregoing embodiments. The readable storage medium includes a computer-readable storage medium such as a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or instructions to implement the processes of the foregoing information display method embodiment, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the program product is stored in a storage medium, and when the program product is executed by at least one processor so as to implement the steps of the foregoing information display method embodiment, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An information display method, wherein the method comprises:
displaying a first component, wherein the first component comprises N controls, each of the N controls corresponds to a different input mode, and N is an integer greater than 1;
receiving a first input performed by a user to a first control of the N controls; and
displaying first information in response to the first input, wherein the first information is obtained based on an input mode corresponding to the first control.

2. The method according to claim 1, wherein the displaying first information in response to the first input comprises:
in response to the first input, displaying a target interface corresponding to the first control;
receiving a second input performed by a user; and
in response to the second input, displaying, in the target interface, the first information input through the second input; wherein an input mode of the second input is the input mode corresponding to the first control; and
the target interface comprises any one of the following: a text editing interface, a shooting preview interface, and a voice recording interface.

3. The method according to claim 1, wherein after the displaying a first component, the method further comprises:
receiving a third input performed by a user to the first component; and
in response to the third input, unfolding the first component and displaying first key information in an unfolded area of the first component; wherein
the first key information comprises key information recorded based on an input mode corresponding to at least one control.

4. The method according to claim 1, wherein a storage space corresponding to the first component stores S pieces of information, the S pieces of information are information input based on an input mode corresponding to at least one control, and S is a positive integer; and
after the displaying a first component, the method further comprises:
displaying a second component; wherein
the second component comprises second key information, wherein the second key information is key information of at least one piece of information of the S pieces of information; and
the at least one piece of information comprises at least one of the following:
information determined based on a target input, information comprising a preset keyword, and information conforming to a preset display mode.

5. The method according to claim 4, wherein after the displaying a first component, the method further comprises:
displaying an information editing interface, wherein the information editing interface contains the S pieces of information;
receiving a fourth input performed by a user to second information in the information editing interface; and
adding the second information to the second component in response to the fourth input.

6. The method according to claim 4, wherein the displaying a second component comprises:
receiving a fifth input performed by a user to the first component; and
updating the display of the first component to the second component in response to the fifth input.

7. The method according to claim 1, wherein after the displaying first information in response to the first input, the method further comprises:
storing the first information into a storage space corresponding to the first component.

8. An information display apparatus, wherein the information display apparatus comprises a display module and a receiving module; wherein
the display module is configured to display a first component, wherein the first component comprises N controls, each of the N controls corresponds to a different input mode, and N is an integer greater than 1;
the receiving module is configured to receive a first input performed by a user to a first control of the N controls; and
the display module is further configured to display first information in response to the first input received by the receiving module, wherein the first information is obtained based on an input mode corresponding to the first control.

9. The apparatus according to claim 8, wherein the display module is specifically configured to, in response to the first input, display a target interface corresponding to the first control;
the receiving module is further configured to receive a second input performed by a user; and
the display module is specifically configured to, in response to the second input received by the receiving module, display, in the target interface, the first information input through the second input; wherein an input mode of the second input is the input mode corresponding to the first control; and
the target interface comprises any one of the following: a text editing interface, a shooting preview interface, and a voice recording interface.

10. The apparatus according to claim 8, wherein the information display apparatus further comprises a processing module; wherein
the receiving module is further configured to receive a third input performed by a user to the first component; and
the processing module is configured to, in response to the third input received by the receiving module, unfold the first component and display first key information in an unfolded area of the first component; wherein
the first key information comprises key information recorded based on an input mode corresponding to at least one control.

11. The apparatus according to claim 8, wherein a storage space corresponding to the first component stores S pieces of information, the S pieces of information are information input based on an input mode corresponding to at least one control, and S is a positive integer; and
the display module is further configured to display a second component; wherein
the second component comprises second key information, wherein the second key information is key information of at least one piece of information of the S pieces of information; and
the at least one piece of information comprises at least one of the following: information determined based on a target input, information comprising a preset keyword, and information conforming to a preset display mode.

12. The apparatus according to claim 11, wherein the information display apparatus further comprises a processing module; wherein
the display module is further configured to display an information editing interface, wherein the information editing interface contains the S pieces of information;
the receiving module is further configured to receive a fourth input performed by a user to second information in the information editing interface; and
the processing module is configured to add the second information to the second component in response to the fourth input received by the receiving module.

13. The apparatus according to claim 11, wherein
the receiving module is further configured to receive a fifth input performed by a user to the first component; and
the display module is specifically configured to update the display of the first component to the second component in response to the fifth input received by the receiving module.

14. The apparatus according to claim 8, wherein the information display apparatus is further capable of comprising a storage module; wherein
the storage module is configured to store the first information into a storage space corresponding to the first component.

15. An electronic device, comprising a processor and a memory, wherein the memory stores a program or instructions capable of running on the processor, and when the program or instructions are executed by the processor, the steps of the information display method according to any one of claims 1 to 7 are implemented.

16. A readable storage medium, wherein the readable storage medium stores a program or instructions, and when the program or instructions are executed by a processor, the steps of the information display method according to any one of claims 1 to 7 are implemented.

17. A computer program product, wherein when the program product is executed by at least one processor, the information display method according to any one of claims 1 to 7 is implemented.

18. An electronic device, wherein the electronic device is configured to perform the information display method according to any one of claims 1 to 7.

19. A chip, wherein the chip comprises a processor and a communication interface, the communication interface is coupled to the processor, and the processor is configured to run a program or instructions so as to implement the information display method according to any one of claims 1 to 7.
